(19)

Europäisches
Patentamt
European
Patent Office
Office européen
des brevets

(11) **EP 2 017 002 A2**

(12) **EUROPEAN PATENT APPLICATION**

(43) Date of publication:
**21.01.2009 Bulletin 2009/04**

(51) Int Cl.:
**B01J 19/18** *(2006.01)*        **C08G 63/183** *(2006.01)*
**C08G 63/78** *(2006.01)*

(21) Application number: **08012504.0**

(22) Date of filing: **10.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **19.07.2007 JP 2007188778**

(71) Applicant: **Hitachi Plant Technologies, Ltd.**
**Toshima-ku**
**Tokyo 170-8466 (JP)**

(72) Inventors:
• **Oka, Kenichiro**
**Tokyo 100-8220 (JP)**
• **Matsuo, Toshiaki**
**Tokyo 100-8220 (JP)**
• **Kamikawa, Masayuki**
**Tokyo 100-8220 (JP)**
• **Sase, Yasunari**
**Tokyo 170-8466 (JP)**

(74) Representative: **Strehl Schübel-Hopf & Partner**
**Maximilianstrasse 54**
**80538 München (DE)**

(54) **Polyester manufacturing apparatus and method**

(57)     To provide a manufacturing apparatus of polyester and a method for manufacturing polybutylene terephthalate, wherein a first processor of preparing an oligomer is improved in efficiency.

A apparatus for manufacturing polybutylene terephthalate in the present invention comprises, at least, a first processor 1 including a vertical cylindrical esterification processor 10, a lower header tube constituted by a plurality of unit lower header tubes 111a-d, an upper header tube constituted by a plurality of unit upper header tubes 113a-d, heat transfer tubes 112a-d that are made of a plurality of communicating tubes connecting the unit lower header tubes 111a-d and the unit upper header tubes 113a-d, which are vertically facing each other, so as to enable a vapor phase or liquid phase heat medium to be communicable therethrough, and an agitation blade 120, characterized in that the respective unit lower header tubes 111a-d and the respective unit upper header tubes 113a-d are formed with a heat medium outflow and inflow unit.

## FIG. 1

EP 2 017 002 A2

**Description**

TECHNICAL FIELD:

This invention relates to a polyester manufacturing apparatus and a method for manufacturing polyester.

BACKGROUND ART:

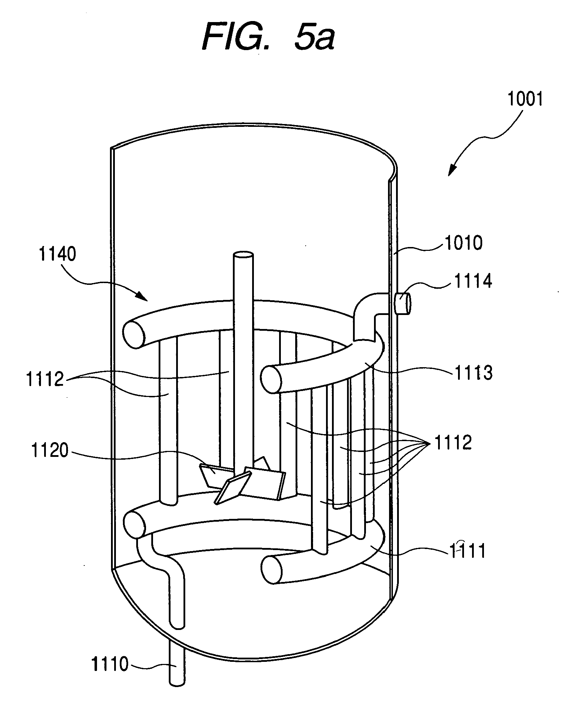

Polyesters such as polybutylene terephthalate, polyethylene terephthalate, polytrimethylene terephthalate, polybutylene succinate, polyethylene succinate and the like are prepared by providing a dicarboxylic acid and a glycol as starting materials and adding a catalyst to the mixture, followed by esterification and polymerization steps. In the esterification step, two carboxyl groups of the dicarboxylic acid are, respectively, esterified with the glycol to provide a monomer, and the monomers are mutually reacted by polycondensation reaction to form oligomers having an average degree of polymerization of about 1-10. As a method and apparatus for manufacturing polybutylene terephthalate (hereinafter abbreviated as PBT), which is one of polyester polymers, apparatuses disclosed in Document 1 (Japanese Patent Laid-open No. Showa 62-195017) and Document 2 (Japanese Patent Laid-open No. 2006-111647) are known.
In Document 1, a polymerization method of PBT that is one of polyesters is described. In Document 1, reference is made to a method of reducing the formation of tetrahydrofuran (hereinafter referred to as THF) caused by thermal degradation of a starting glycol (1,4-butandiol). It is stated in Document 1 that according to this method, polymerization should preferably be carried out at a temperature as high as possible, at a pressure as low as possible and at a time as short as possible. However, in Document 1, no reference is made to an arrangement of the apparatus of realizing such reaction conditions as set out above in case where the apparatus is large in scale.
On the other hand, in Document 2, there is disclosed a apparatus for manufacturing a polyester polymer, which comprises a first processor of preparing an oligomer by subjecting a solution containing a dicarboxylic acid and a glycol to esterification reaction, a second processor of preparing a polymer with a small degree of polymerization by polycondensation of the oligomer from the first processor, and a third processor of preparing a polymer with a high degree of polymerization by further polycondensation of a low polymerized polymer from the second processor. The main part of a first processor 1001 has such a structure as shown in Fig. 5a. More particularly, the first processor 1001 is one wherein a solution containing a dicarboxylic acid and a glycol is agitated and heated by application of heat of a vapor phase or liquid phase heat medium to subject the solution to esterification reaction to prepare an oligomer. The first processor 1001 includes, at least, a vertical cylindrical esterification processor 1010 to which the solution is fed, an agitator 1120 for agitating the solution in the esterification processor, and a heater 1140 including an upper header tube 1113 provided at an inner upper portion of the esterification processor 1010, a lower header tube 1111 provided at an inner lower portion of the esterification processor 1010, and heat transfer tubes 1112 made of a plurality of communicating tubes connected to the upper header tube 1113 and the lower header tube 1111 in such a way that the heat medium is able to be circulated therethrough. The lower header tube 1111 has a lower heat medium inflow and outflow nozzle 1110 through which the heat medium is permitted to flow in or out. The upper header tube 1113 has an upper heat medium inflow and outflow nozzle 1114 through which the heat medium is permitted to flow in or out. In Document 2, it is stated that the reaction conditions recommended for the apparatus include temperature conditions of 220° C-250° C and the pressure conditions are reduced pressure or slightly pressurized conditions.

SUMMARY OF THE INVENTION:

A apparatus for manufacturing a polyester polymer comprises a first processor for preparing an oligomer by agitating a solution containing a dicarboxylic acid and a glycol and heating the solution with a vapor or liquid phase heat medium to make an esterification reaction, wherein the first processor comprises at least, a vertical cylindrical type esterification processor to which the solution is fed, an agitator for agitating the solution in the esterification processor, and a heater including a set of upper header tubes disposed at an upper portion in the esterification processor, a set of lower header tubes disposed at a lower portion in the esterification processor, and a plurality of communicating tubes connected to the upper header tubes and the lower header tubes, the plurality of communicating tubes enabling the heat medium to flow through the upper header tube and the lower header tube, characterized in that the set of upper header tubes are constituted by a plurality of unit upper header tubes provided along a circumferential direction of the esterification processor, the set of lower header tubes are constituted by a plurality of unit lower header tubes provided along the circumferential direction of the esterification processor, and the communicating tubes are respectively connected to the unit upper header tubes and the unit lower header tubes that are vertically in a face-to-face relation with each other, and the unit upper header tubes and the unit lower header tubes respectively have heat medium inflow and outflow ports for permitting the heat medium to flow in or flow out.
According to the apparatus of the invention, since the upper and lower header tubes are, respectively, divided into plural unit header tubes in the first processor, a temperature variation of a plurality of heat transfer tubes provided as the communicating tubes that allow the upper and lower header tubes to be communicated therethrough can be suppressed with a reduced danger of breakage ascribed to thermal stress upon heating at the joint portions of the heat transfer tubes. Eventually, a polyester polymer of good quality can be efficiently continuously produced and, at the same time, a formed amount of side products can be reduced and production efficiency can be improved.

BRIEF DESCRIPTION OF THE DRAWINGS:

Fig. 1 is a systematic view showing an entirety of an embodiment of an apparatus for manufacturing PBT (polybutylene terephthalate) in the present invention.
Fig. 2 is a perspective view showing a structure in an esterification processor of an embodiment wherein a plurality of heat transfer tubes are singly provided in a first processor in the present invention.
Fig. 3 is a longitudinal sectional view showing another embodiment of a first processor in the present invention.
Fig. 4 is a view showing a further embodiment of a first processor including the flow of a solution in the present invention wherein (a) is a cross sectional view and (b) is a longitudinal sectional view.
Fig. 5a is a perspective view showing a structure in an esterification processor of a first processor in prior art (Patent Document 2).
Fig. 5b is a schematic view of a heat medium flow path of a heater in a first processor of prior art (Patent Document 2).
Fig. 6 is a longitudinal sectional view showing an embodiment of a second processor (initial polymerization processor) in the present invention.
Fig. 7 is a view showing an embodiment of a final polymerization processor (third processor) constituted by a single apparatus in the present invention wherein (a) is a plan view, partly in section, and (b) is a front view, partly in section.
Fig. 8 is a side sectional view (partition plates not shown) of an embodiment of the final polymerization processor (third processor) shown in Fig. 7.
Fig. 9 (a) and (b) are, respectively, perspective views showing embodiments of a partition plate in the present invention.
Fig. 10 (a) and (b) are, respectively, perspective views showing another embodiments of a partition plate in the present invention.
Fig. 11 is a perspective view showing another embodiment of a first processor in the present invention.
Fig. 12 is a cross sectional view showing a further embodiment of a first processor including a flow of a solution in the present invention.

DETAILED DESCRIPTION OF THE PREFERRED EMBODIMENTS:

This invention relates to a continuous manufacturing method and apparatus of polyester polymers such as polybutylene terephthalate, polyethylene terephthalate, polytrimethylene terephthalate, polybutylene succinate, polyethylene succinate and the like.

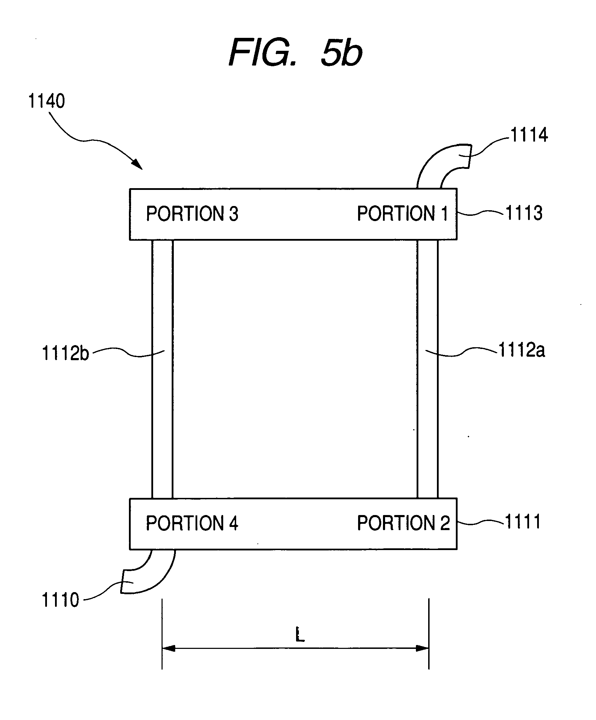

With the first processor 1001 described in the Patent Document 2, only one thermal medium inflow and outflow portion is provided at the upper and lower header tubes, respectively, for which a temperature variation is liable to occur, with the attendant problem that there is the possibility of thermal stress breakage at joint portions between the upper and lower header tubes and the heat transfer tubes. This is illustrated with reference to Fig. 5b. Fig. 5b is a schematic view planarly showing a heater 1140 alone in the apparatus of the Patent Document 2. In Fig. 5b, only two heat transfer tubes (1112a and 1112b) are depicted for simplification. Where a heat medium is introduced from the lower heat medium outflow and inflow nozzle 1110, for example, there are a path wherein the heat medium moves upwardly from a portion 4 of the lower header tube in the heat transfer tube 1112b, heat exchange is carried out between the solution and the heat medium during the moving up, followed by arriving at a portion 1 through a portion 3 of the upper header tube and discharging from the upper heat medium outflow and inflow nozzle 1114, and another path wherein the heat medium moves upwardly in the heat transfer tube 1112b from a portion 4 of the lower header tube through a portion 2 of the lower header tube and heat exchange is carried out between the solution and the heat medium during the moving up, followed by arriving at the portion 1 of the upper header tube and discharging from the upper heat medium outflow and inflow nozzle 1114. A distance between the portions 2 and 4 is taken as L, and temperatures of the heat medium at the portions 1, 2, 3 and 4 are taken as T1, T2, T3 and T4, respectively. In this case, since the heat medium releases heat during the movement through the lower header tube by the distance L, it becomes T4>T2. As a result, it becomes (T4-T3)>(T2-T1). More particularly, the connection portions to the upper header tube and the connection portions to the lower header tube differ from each other with respect to the temperature difference for every heat transfer tube. If the temperature differences differ from each other, coefficients of thermal expansion in vertical directions also differ, thus resulting in the difference in stress ascribed to the thermal expansion in vertical directions. This difference could bring about the possibility that a load is exerted on the connections between the heat transfer tube 112 and the upper and lower header tubes and thus, the connections suffer breakage. The difference between T4 and T2 is prone to be greater at a longer distance L. With the apparatus described in Patent Document 2 as shown in Fig. 5a, the upper and lower header tubes are integrally constituted along the circumferential direction, with the attendant problem that a distance corresponding to the distance L in Fig. 5b is so long that there is high possibility of breakage by thermal stress. Such possibility of breakage by thermal stress increases under high temperature conditions and thus leads to a prolonged reaction time, thereby forming reaction side products in large amounts. For this, when using the apparatus of Patent Document 2, it is inevitable to permit the reaction to proceed at low temperatures that are inconvenient for the reaction, with the problem in that the reaction time is prolonged, large amounts of reaction side products are formed, and the production efficiency lowers.

The first processor set out in the Patent Document 1 is disposed with a number of heat transfer tubes at the upper and lower header units, thus present a problem in that there is the possibility of breakage by thermal stress ascribed to thermal expansion along the circumferential direction of the header units at high temperature operations. A similar problem has been experienced in the diethylene glycolation of ethylene glycol in the polymerization of polyethylene terephthalate and also in the acrolein conversion of 1,3-propanediol in the polymerization of polytrimethylene terephthalate.

An object of the invention is to solve the above problems and provide a manufacturing apparatus and method of polybutylene terephthalate using a first processor of preparing an oligomer having an average degree of polymerization of about 2-5 by reaction between a dicarboxylic acid and a glycol, wherein an operation is enabled under high temperature conditions.

Another object of the invention is to provide a manufacturing apparatus and method of polybutylene terephthalate using a first processor of preparing an oligomer having an average degree of polymerization of about 2-5 by reaction between an aromatic dicarboxylic acid mainly composed of terephthalic acid and a glycol mainly composed of 1, 4-butanediol, wherein an operation is enabled at a temperature of from 220°C to 250°C, preferably from 240°C to 250°C at a pressure of from 200 Torr to 800 Torr, preferably from 200 Torr to 400 Torr.

The present inventors made studies in order to achieve the above objects and arrived at completion of the invention.

The invention provides a apparatus for manufacturing a polyester polymer, which comprising, at least, a first processor of preparing an oligomer by agitating a solution containing a dicarboxylic acid and a glycol under which the solution is subjected to esterification reaction by application of heat from a vapor phase or liquid phase heat medium, the first processor including a vertical cylindrical esterification processor to which the solution is fed, an agitator for agitating the solution in the esterification processor, and a heater for enabling the heat medium to flow, which has an upper header tube disposed at an inner upper portion of the esterification processor, a lower header tube disposed at an inner lower portion of the esterification processor and a plurality of communicating tubes connected to the upper header tube and the lower header tube enabling the heat medium to flow through the upper header tube and the lower header tube, characterized in that the upper header tube is constituted by a plurality of unit upper header tubes provided along a circumferential direction of the esterification processor, the lower header tube is constituted by a plurality of unit lower header tubes provided along a circumferential direction of the esterification processor, and the communicating tubes are, respectively, connected to the unit upper header tubes and the unit lower header tubes that are vertically in face-to-face relation with each other, the unit upper header tubes and the unit lower header tubes being, respectively, formed with a heat medium outflow and inflow port for permitting the heat medium to flow in or flow out.

The invention also provides a manufacturing method of a polyester polymer, characterized by preparing an oligomer by subjecting a solution containing a dicarboxylic acid and a glycol to esterification reaction under high temperature conditions by use of the above-mentioned apparatus.

Embodiments of a manufacturing apparatus and method of a polyester polymer in the present invention are described in detail.

This invention relates to an apparatus for manufacturing a polyester polymer having a feature that resides in a structure of a first processor of preparing an oligomer wherein while agitating a solution containing a dicarboxylic acid and a glycol, the solution is subjected to esterification reaction by application of heat from a vapor phase or liquid phase heat medium. The apparatus for manufacturing a polyester polymer in the present invention may further comprise, aside from the first processor, a second processor of preparing a polymer with a low degree of polymerization by polycondensation of the oligomer from the first processor and a third processor of preparing a polymer with a high degree of polymerization by further polycondensation of a low polymerized polymer from the second processor.

The first processor has, at least, a vertical cylindrical esterification processor to which the solution is fed, an agitator for agitating the solution in the esterification processor, and a heater for enabling the heat medium to flow, which has an upper header tube disposed at an inner upper portion of the esterification processor, a lower header tube disposed at an inner lower portion of the esterification processor, and a plurality of communicating tubes connected to the upper header tube and the lower header tube enabling the heat medium to flow through the upper header tube and lower header tube. When the heat medium passes individual communicating tubes, heat exchange between the solution and the heat medium is carried out on the surfaces of the communicating tubes. More particularly, the communicating tubes serves as heat transfer tubes. The term "communicating tubes" used herein is a designation in case where attention is directed to a form thereof, and the term "heat transfer tubes" is a designation of the case where attention is paid to the function of "communicating tubes". In this specification, a plurality of heat transfer tubes may be sometimes referred to "heat transfer multi-tubes".

A first feature of the invention resides in that the upper header tube is constituted by a plurality of unit upper header tubes arranged along the circumferential direction of the esterification processor, the lower header tube is constituted by a plurality of unit lower header tubes arranged along the circumferential direction of the esterification processor, and individual communicating tubes are connected to the unit upper header tubes and the unit lower header tubes that are vertically facing each other, wherein the respective unit upper header tubes and the respective lower header tubes are formed with at least one heat medium outflow and inflow portion through which the heat medium flows in or flows out. The flow paths of adjacent unit upper header tubes along the circumferential direction of the esterification processor and the flow paths of adjacent unit lower header tubes along the circumferential direction of the esterification processor are not mutually communicated, respectively. In this way, when the upper and lower header tubes are, respectively, divided into small units forming a plurality of independent flow paths, the moving distance of the heat medium in the upper and lower header tubes after the flowing-in to or flowing-out from the heat transfer tubes can be shortened. More particularly, a distance corresponding to the distance L in Fig. 5b can be shortened. This makes a small temperature difference of the heat medium depending on the position in the respective unit header tubes. As a result, the temperature variation depending on the difference in connection position of the respective heat transfer tubes to the header tubes can be suppressed, with a reduced danger of thermal breakage ascribed to the stress resulting from the thermal expansion along vertical directions of the heat transfer tubes. The unit upper header tubes and unit lower header tubes are not limited in number. It is preferred that the respective unit upper header tubes and the respective unit lower header tubes are formed in such a shape that the length thereof is extended along the circumferential direction of the esterification processor. Using the first processor having this feature, it becomes possible to carry out the reaction of preparing an oligomer by esterification reaction of the solution containing a dicarboxylic acid and glycols under high temperature conditions.

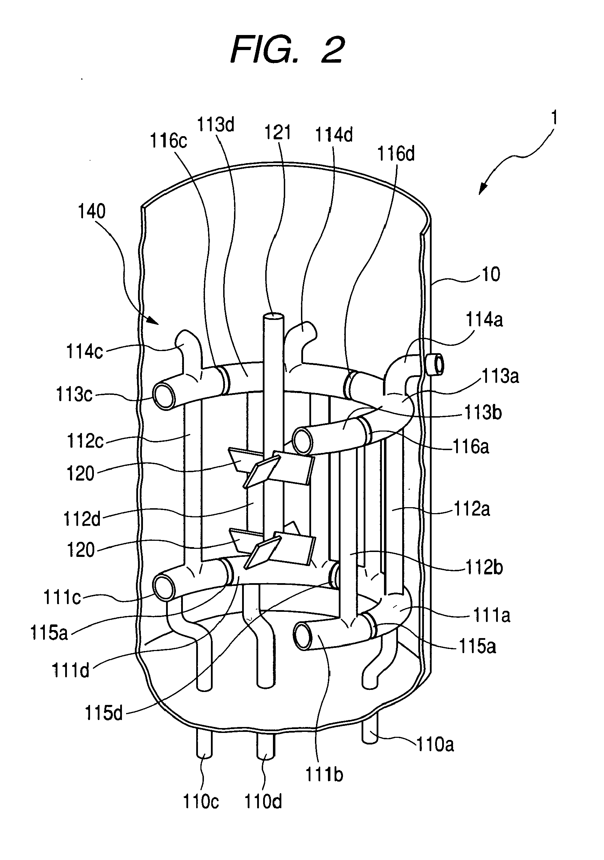

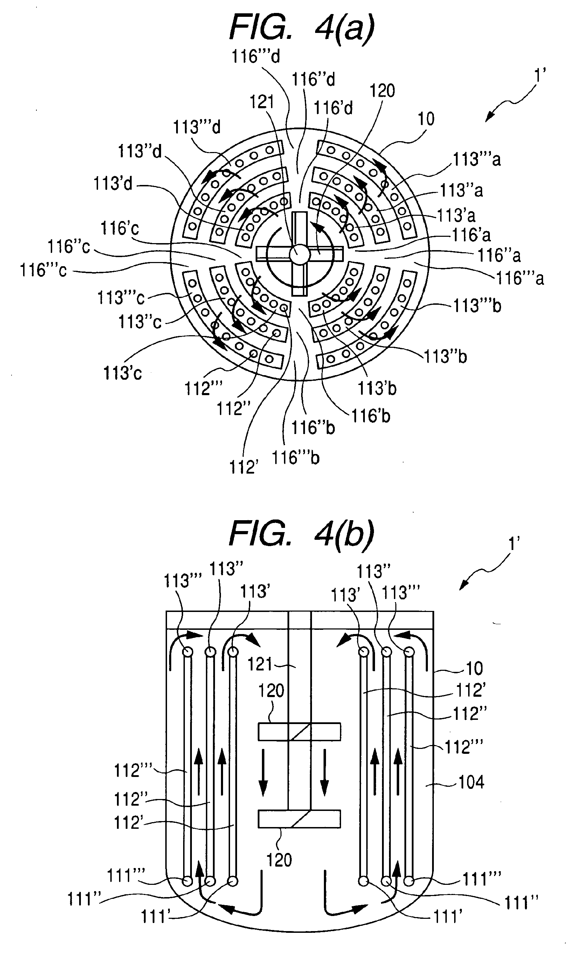

A second feature of the invention resides in that the plurality of unit upper header tubes and the plurality of unit lower header tubes are so formed that a space is formed between header tubes adjacent along circumferential direction of the esterification processor. An instance of the first processor having this feature is shown in Figs. 2 and 4. According to the feature, the thermal expansion of the respective unit header tubes along the circumferential direction of the esterification processor can be absorbed through the spaces, thereby ensuring avoidance of thermal breakage.

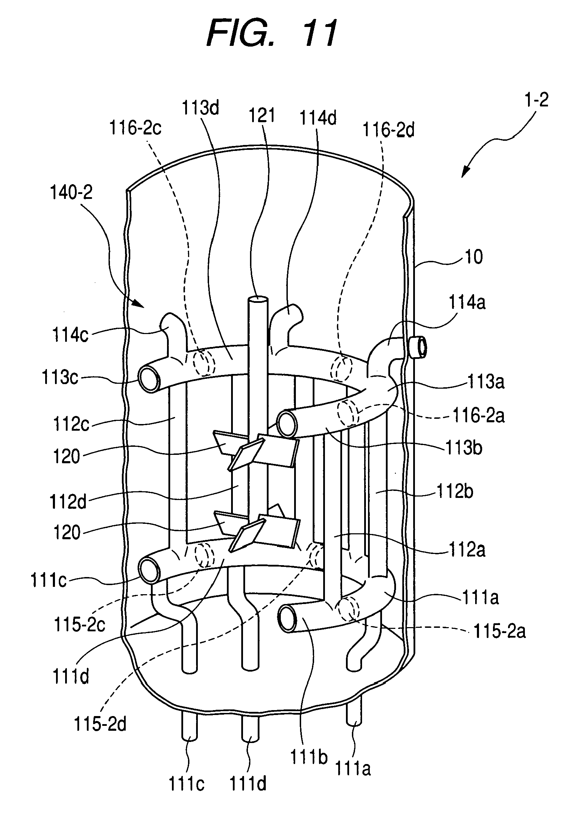

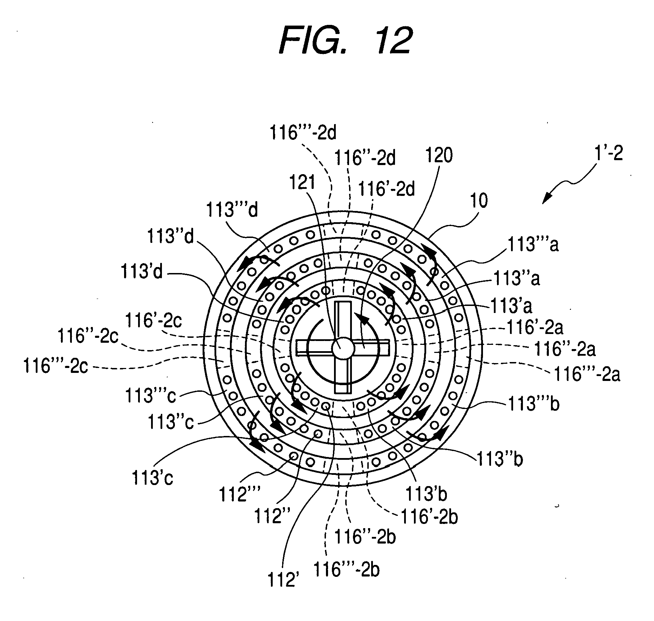

A third feature of the invention resides in that the plurality of unit upper header tubes and the plurality of lower header tubes are so formed that header tubes thereof adjacent along the circumferential direction of the esterification processor are connected through a connection member and that a coefficient of thermal expansion of the connection member is equal to or smaller than a coefficient of thermal expansion of the plurality of unit upper header tubes and the plurality of unit lower header tubes. An instance of the first processor having this feature is shown in Figs. 11 and 12. According to this feature, the thermal expansion of the respective unit header tubes along the circumferential direction of the esterification processor can be absorbed, thereby ensuring avoidance of thermal breakage.

A fourth feature of the invention resides in that the plurality of communicating tubes (heat transfer tubes) are arranged along a central axis of the esterification processor on circumferences of a plurality of concentric circles about the central axis of the esterification processor. In this case, it is preferred that the plurality of unit upper header tubes and the plurality of unit lower header tubes are, respectively, arranged on the circumferences of the plurality of concentric circles about the central axis of the esterification processor. It is more preferred that the plurality of unit upper header tubes and the plurality of unit lower header tubes are, respectively, disposed on peripheries of the same number of concentric circles having the same radii about the central axis of the esterification processor. An instance of the first processor having this feature is shown in Figs. 4 and 12. This feature ensures a wide heat transfer area, thereby improving a heat transfer performance in the esterification step.

The agitator in the apparatus of the invention is not critical provided that it is able to agitate a solution containing a dicarboxylic acid and a glycol in the esterification processor and bring the solution into adequate contact with a plurality of heat transfer tubes disposed in the esterification processor. Such an agitating means includes, for example, an agitation blade. The agitation blade is preferably located at a center of at least one horizontal section of the esterification processor. The agitation blade is preferably one that rotates about the same or substantially the same axis as the central axis of the esterification processor. The agitation blade is preferably capable of generating a flow of the solution in a direction therebeneath. Where the agitation blade is provided at a central portion of at least one horizontal section of the esterification processor, it is preferred that the plurality of communicating tubes are arranged along the central axis of the esterification processor and around the at least one horizontal section to surround the central portion.

The invention also provides a manufacturing method of a polyester polymer using the apparatus of the invention having such features as set out above. A feature of this method resides in that the step of preparing an oligomer by subjecting a solution containing a dicarboxylic acid and glycols to esterification reaction is carried out by feeding the solution to the esterification processor and operating the vessel by setting an inner temperature of the esterification processor at 220°C-250°C and an inner pressure of the esterification processor at 200 Torr-800 Torr. The temperature is preferably at 240° C-250° C. The pressure is preferably at 200 Torr-400 Torr. The operation under such conditions as mentioned above is difficult to realize in prior art reaction apparatus. In the method of the invention, it is preferred to use an aromatic dicarboxylic acid mainly composed of terephthalic acid as the dicarboxylic acid and a glycol mainly composed of 1,4-butanediol as the glycol.

An embodiment of the apparatus of the invention is described in detail with reference to the accompanying drawings.

(Full apparatus)

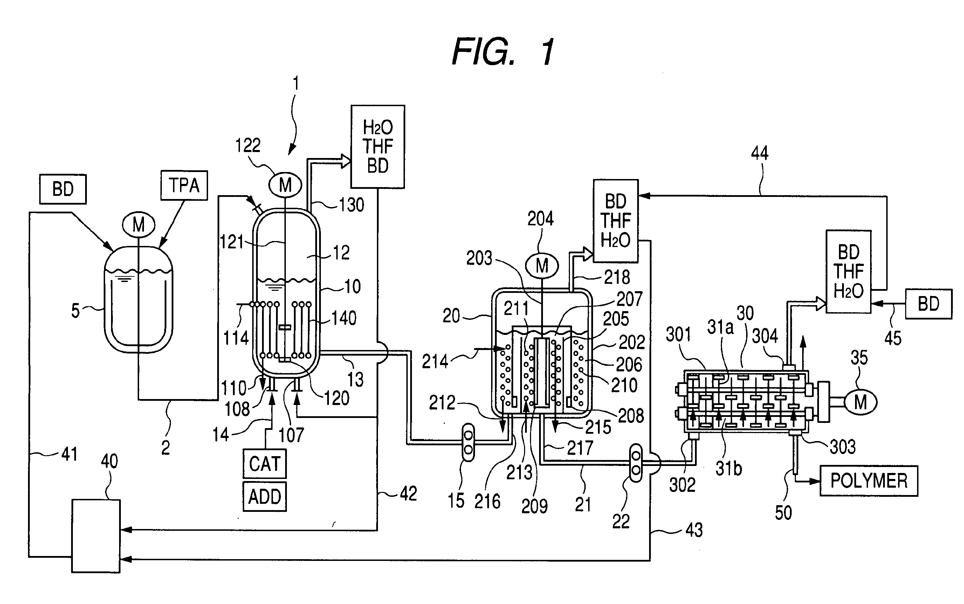

Fig. 1 is a view showing an entire configuration of an instance of an apparatus for manufacturing a polyester polymer in the present invention. In Fig. 1, there is also shown an instance of a manufacturing process of a polyester polymer using the apparatus. For an instance, there is illustrated the case where a polyester polymer of PBT (polybutylene terephthalate) is manufactured. A direct esterification process is very advantageous as an industrial polyester manufacturing process from the standpoint of economy and thus, the direct esterification process is frequently adopted in recent years for the production of polyesters. In Fig. 1, indicated by 5 is a balancing vessel for starting materials wherein TPA (terephthalic acid) and BD (1,4-budanediol) used as starting materials for PBT are mixed at a given ratio and agitated. The starting materials obtained in the balancing vessel 5 are fed from a starting material feed line 2 through a starting material inlet 105 to a first processor 1 equipped with an esterification processor 10. In case where a polymerization reaction catalyst (CAT), and additives (ADD) such as a stabilizer, a quality controlling agent and the like are added at this stage, the polymerization reaction catalyst and additives may be charged from a catalyst charging line 14 through a catalyst feed port 108 into the esterification processor 10. As a polymerization reaction catalyst, mention is made of known metal compounds such as organic titanium, organic tin, organic zirconia and the like. It is well known that the types and combination of catalysts used not only cause a reaction rate to differ, but also greatly influence the hue, thermal stability and the like of the resulting PBT. Organic titanium that is most employed industrially at present as a catalyst is excellent in cost and performance. In this connection, however, even when this catalyst is used, coloration of the resulting polyester polymer cannot be avoided. For solving the problem, there may be used, in combination, a phosphorus stabilizer (e.g. phosphoric acid, trimethyl phosphate, triphenyl phosphate or the like) as a stabilizer. Alternatively, in another process, a polymerization catalyst and a stabilizer may be charged at such a devised position as to stabilize the quality. In an ordinary process, the amount of a catalyst is preferably at 20 -100 ppm calculated as titanium metal, and the amount of a stabilizer is preferably at 0-600 ppm calculated as phosphorus, if necessary.

(First processor)

Fig. 2 shows a preferred embodiment of the first processor. The first processor 1 depicted in Fig. 2 shows an embodiment including a vertical cylindrical esterification processor 10, a plurality of (four) unit lower header tubes 111a-d singly provided along a circumferential direction of the esterification processor, a plurality of (four) unit upper header tubes 113a-d provided along the circumferential direction of the esterification processor, a plurality of heat transfer tubes 112a-d serving as communicating tubes connecting the unit upper header tubes 113a-d and the unit lower header tubes 111a-d, which are vertically opposing with each other, in such a way that a vapor or liquid phase heat medium is communicable, two agitation blades 120 arranged at a central portion in two horizontal sections of the esterification processor and rotating about a central axis of the esterification processor to agitate the fed solution, and an agitation shaft 121 for the agitation blades. A heater 140 for circulating the heat medium is constituted by the unit lower header tubes 111a-d, unit upper header tubes 113a-d, and heat transfer tubes 112a-d. The agitation blades 120 are preferably ones that are able to produce the flow of the solution in a direction therebeneath. The unit lower header tubes 111a-d, respectively, have lower heat medium outflow and inflow nozzles 110a-d (although b is not shown) serving as heat medium outflow and inflow units for permitting the heat transfer tube heat medium to flow in or out. The unit upper header tubes 113a-d, respectively, have upper heat medium outflow and inflow nozzles 114a-d (although b is not shown) serving as heat medium outflow and inflow units for permitting the heat transfer tube heat medium to flow in or out. The heat transfer tubes 112a-d, respectively, have sizes including, for example, a diameter of about 20 mm and a length of about 150 cm although not limited thereto. The heat transfer tube heat medium is a vapor phase heat medium or a liquid phase heat medium. The temperature of the heat medium preferably ranges about 245° C-260° C. Where a liquid phase heat medium is used as the heat transfer tube heat medium, the liquid phase heat medium is supplied from outside of the esterification processor through the lower heat medium outflow and inflow nozzles 110a-d to the unit lower header tubes 111a-d, to which the respective nozzles are connected. The thus supplied liquid phase heat medium flows from the lower portions of the heat transfer tubes 112a-d to the upper portions and are discharged from the unit upper header tubes 113a-d through the upper heat medium outflow and inflow nozzles 114a-d to outside of the esterification processor. Where a vapor phase heat medium (steam gas) such as of an oil is used as the heat transfer tube heat medium, the vapor phase heat medium is supplied from outside of the esterification processor through the upper heat medium outflow and inflow nozzles 114a-d to the unit upper header tubes 113a-d to which the respective nozzles are connected. The thus supplied vapor phase heat medium flows from the upper to lower portions of the heat transfer multi-tubes 112a-d and is discharged from the unit lower header tubes 111a-d through the lower heat medium outflow and inflow nozzles 110a-d to outside of the esterification processor. It will be noted that in Fig. 2, the division numbers of the upper header tubes and the lower header tubes along the circumferential direction are, respectively, taken as 4, which should not be construed as limited thereto in practice. Since the unit lower header tubes 111a-d and the unit upper header tubes 113a-d are, respectively, short in flow path length along the circumferential direction of the esterification processor, a temperature variation for every heat transfer tube connected to the respective unit upper header tubes 113a-d and the unit lower header tubes 111a-d is small, so that there is a reduced danger of thermal breakage. In the embodiment shown in Fig. 2, there are spaces 115a-d (although b is not shown) each between adjacent unit lower header tubes of the unit lower header tubes 111a-d along the circumferential direction of the esterification processor, and there are spaces 116a-d (although b is not shown) each between adjacent unit upper header tubes of the unit upper header tubes 113a-d along the circumferential direction of the esterification processor. This structure enables thermal expansion of the unit lower header tubes 111a-d along the circumferential direction of the esterification processor to be absorbed by the spaces 115a-d and also thermal expansion of the unit upper header tubes 113a-d along the circumferential direction of the esterification processor to be absorbed by the spaces 116a-d, thereby ensuring avoidance of thermal breakage.

It is to be noted that adjacent ones of the unit lower header tubes 111a-d and the unit upper header tubes 113a-d along the circumferential direction of the esterification processor may be connected by means of a connection member that has a coefficient of thermal expansion equal to or smaller than the coefficients of thermal expansion of the unit lower header tubes 111a-d and the unit upper header tubes 113a-d. This embodiment is shown in Fig. 11. In Fig. 11, indicated by 115-2a-d (although b is not shown) and by 116-2a-d (although b is not shown) are connection members having a coefficient of thermal expansion equal to or smaller than coefficients of thermal expansion of the unit lower header tubes 111a-d and the unit upper header tubes 113a-d. Such a structure enables thermal expansion of the unit lower header tubes 111a-d along the circumferential direction of the esterification processor to be absorbed by the connection members 115-2a-d and also thermal expansion of the unit upper header tubes 113a-d along the circumferential direction of the esterification processor to be absorbed by the connection members 116-2a-d, thereby ensuring avoidance of thermal breakage.

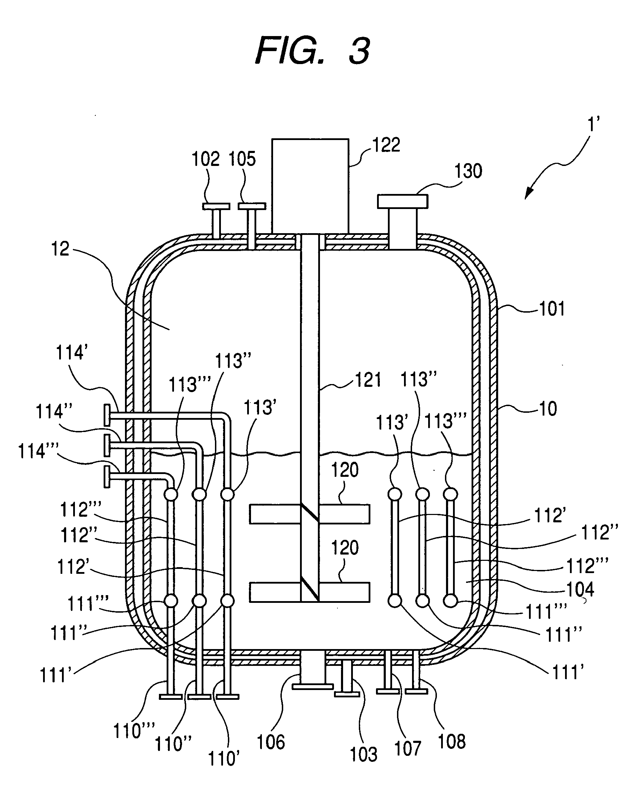

In Figs. 3 and 4, another embodiment of a first processor is shown. A heater 140' of a first processor 1' shown in Figs. 3 and 4 includes, at a lower portion of an esterification processor 10, a lower header tube 111' made of four unit lower header tubes arranged on a circumference about a central axis of the esterification processor 10, a lower header tube 111'' which runs outside of the circumference at the same positional height as the circumference where individual unit lower header tubes constituting the lower header tube 111' are arranged and which is made of four unit lower header tubes arranged on a circumference having the same center as the first-mentioned circumference, a lower header tube 111''' which runs outside of the second-mentioned circumference at the same positional height as the second-mentioned circumference where individual unit lower header tubes constituting the lower header tube 111'' are arranged and which is made of four unit lower header tubes arranged on a circumference having the same center as the second-mentioned circumference, and, at an upper portion within the esterification processor 10, an upper header tube 113' (it has the same radius as the lower header tube 111') which is arranged on a circumference about a central axis of the esterification processor 10 and made of four unit upper header tubes 113' a-d, an upper header tube 113'' (it has the same radius as the lower header tube 111'') which runs outside of the circumference at the same positional height as the circumference where individual unit upper header tubes 113' a-d are arranged and which is made of four unit upper header tubes 113''a-d arranged on a circumference having the same center as the first-mentioned circumference, an upper header tube 113''' (it has the same radius as the lower header tube 111''') which runs outside of the second-mentioned circumference at the same positional height as the second-mentioned circumference where individual unit upper header tubes 113''a-d are arranged and which is made of four unit upper header tubes 113'''a-d arranged on a circumference having the same center as the second-mentioned circumference, a heat transfer multi-tube 112' serving as a plurality of communicating tubes communicating the respective unit upper header tubes 113'a-d serving as the upper header tube 113' and the respective unit lower header tubes serving as the lower header tube 111', which are vertically opposing to each other, a heat transfer multi-tube 112'' serving as a plurality of communicating tubes communicating the respective unit upper header tubes 113''a-d serving as the upper header tube 113'' and the respective unit lower header tubes serving as the lower header tube 111'', which are vertically opposing to each other, and a heat transfer multi-tube 112''' serving as a plurality of communicating tubes communicating the respective unit upper header tubes 113'''a-d serving as the upper header tube 113''' and the respective unit lower header tubes serving as the lower header tube 111''', which are vertically opposing to each other. The respective unit lower header tubes serving as the lower header tubes 111', 111'' and 111''' have lower heat medium outflow and inflow nozzles 110', 110'' and 110''' (not shown at the right side of Fig. 3 and also in Fig. 4(b)) serving as heat medium outflow and inflow units for permitting a heat transfer tube heat medium to flow in or flow out. The respective unit upper header tubes serving as the lower header tubes 113', 113'' and 113''' have upper heat medium outflow and inflow nozzles 114', 114'' and 114''' (not shown at the right side of Fig. 3 and also in Fig. 4(b)) serving as heat medium outflow and inflow units for permitting a heat transfer tube heat medium to flow in or flow out. In Figs. 3 and 4, constituent elements same as or corresponding to those in Fig. 1, respectively, have the same function and configuration as in Fig. 2. In Figs. 3 and 4, there is shown an instance where a plurality of unit lower header tubes and unit upper header tubes arranged on circumferences are triply arranged, respectively. This is only for instance and no limitation is placed on multiplicity. In Figs. 3 and 4, depiction is simplified and according to this embodiment, the heat transfer multi-tubes 112', 112'' and 112''' can be several thousands in total number. In the embodiment shown in Figs. 3 and 4, the heat transfer tubes are multiply arranged, so that the processing time can be remarkably shortened. In the esterification processor 10, when the agitation blades 120 are rotated through the agitation shaft 121 driven by an agitation drive source 122 to agitate the solution 104, the solution at the central portion of the esterification processor 10 flows downwardly from the upper portion to the lower portion as is particularly shown in Fig. 4(b). At the lower portion, the solution runs toward a direction of an outer periphery as shown in Fig. 4(a) and flows upwardly from the lower portion toward the upper portion through between the heat transfer multi-tubes 112', 112'' and 112''' provided in the form of a ring as shown in Fig. 4(b). As a result, the solution can be efficiently heated by means of the heat transfer multi-tubes thereby permitting the reaction to proceed by the synergistic effect of a density change and a temperature difference caused by a volatile gas produced in the esterification reaction step. The heat exchange rate Q is expressed by the following equation (1)

$$Q = U \times A \times \Delta T \qquad (1)$$

U represents a heat transfer coefficient [W/(m$^2 \times$ K)], A represents a total heat transfer area (m$^2$) of the heat transfer multi-tubes 112', 112'' and 112''', and $\Delta$T represents a given logarithmic average temperature difference (K).

In this way, when several thousands of the heat transfer multi-tubes 112', 112'' and 112''' having a diameter of about 20 mm are multiply, concentrically arranged to increase a heat transfer area, the heat transfer multi-tubes 112', 112'' and 112''' are immersed in a solution and the agitation blades 120 are provided at the center, the solution runs from the lower portion toward the upper portion so as to thread through the heat transfer multi-tubes 112', 112'' and 112''', so that the heat transfer coefficient U can be remarkably improved to an extent of about 400. As a consequence, the heat exchange rate Q of the heating means can be remarkably improved, making it possible to shorten the residence time of the solution to about 2 hours.

If individual heat transfer tubes 112', 112'' and 112''' are so arranged that the transverse section thereof is in a zigzag form in a horizontal section of the esterification processor 10, a higher density arrangement becomes possible. Thus, the heat transfer coefficient U can be improved by an increasing heat transfer area A with an increasing number of the tubes and a reduction in space between the heat transfer tubes.

In the embodiment shown in Fig. 4, spaces 116'a-d, 116''a-d and 116'''a-d and spaces between the respective unit lower header tubes serving as the lower header tubes 111', 111'' and 111''', not shown, enable thermal expansion of the respective unit upper header tubes and the respective unit lower header tubes along the circumferential direction of the esterification processor to be absorbed, thereby ensuring avoidance of thermal breakage. It will be noted that in Fig. 12, there is shown another embodiment wherein the spaces 116'a-d, 116''a-d and 116'''a-d shown in Fig. 4 are replaced by connection members 116'-2a-d, 116''-2a-d and 116'''-2a-d having a coefficient of thermal expansion equal to or smaller than a coefficient of thermal expansion of the unit upper header tubes 113'a-d, 113''a-d and 113'''a-d. It will also be noted that with the embodiment of Fig. 12, spaces between the respective unit lower header tubes serving as the lower header tubes 111', 111'' and 111''' are likewise replaced by connection members having a coefficient of thermal expansion equal to or smaller than a coefficient of thermal expansion of the respective unit lower header tubes serving as the lower header tubes 111', 111'' and 111'''. In the embodiment shown in Fig. 12, the thermal expansion of the respective unit upper header tubes and the respective unit lower header tubes along the circumferential direction can be absorbed by means of these connection members, thereby ensuring avoidance of thermal breakage.

Next, other constituent elements of the first processor are described based on Fig. 3. As shown in Fig. 3, a heat medium jacket 101 for keeping a solution at a reaction temperature is formed at an outer periphery of the esterification processor 10. The heat medium jacket 101 is connected with an upper nozzle 102 for jacketed heat medium and a lower nozzle 103 for jacketed heat medium. Indicated by 105 is an inlet for starting material, and by 106 is an outlet for oligomer. Indicated by 107 is a BD feed port and by 108 is a catalyst feed port. Numeral 130 indicates a vapor outlet.

Water formed by the reaction in the first processor generates as water vapor and forms a vapor phase portion 12 along with a gasified BD vapor and a secondarily produced THF vapor. The reaction temperature conditions to be recommended at this state range 220° C-250° C, preferably 240° C-250° C. The reaction pressure conditions include 200 Torr-800 Torr, preferably 200 Torr-400 Torr. The esterification reaction velocity is high under such high temperature conditions and if reduced pressure conditions are set, side reaction products can be quickly eliminated, so that an intended esterification rate can be achieved within a residence time of 2 hours. Since the esterification reaction velocity is improved as set out above, the esterification reaction time is shortened, thereby enabling an amount of THF formed as a side reaction product to be reduced significantly. The amount of the formed THF is at about 15-25 mol%/hour as indicated by a molar fraction of starting TPA. The gases in the vapor phase portion 12, which are volatile components generated from the solution, are separated into water and THF and BD by means of a distillation column (not shown) provided above the esterification processor 10 of the first processor. The water and THF are removed to outside of the system, and BD is returned through a purification step and the like to the system or is returned, as a starting material, from the lower portion of the distillation column to a BD tank 40 via a BD feed line 42. Although circulated BD is fed from the BD tank 40 to the balancing vessel 5 for starting material, the circulated BD in the BD tank 40 is subjected to BD purification treatment (not shown), if necessary, to control the purity of starting BD. If necessary, circulated BD that is discharged from wet condensers (not shown) of pressure reducing devices installed at an initial polymerization processor (second processor) 20 and a final polymerization processor (third processor) is returned from a BD circulation line 43 to the BD tank 40 thereby further improving a BD basic unit. In this case, fresh BD is supplied from a fresh BD feed line 45 to a wet condenser of the final polymerization processor 30, supplied from a BD circulation line 44 to a wet condenser of the second processor 20, and supplied from a BD circulation line 43 to the BD tank 40.

The solution arriving at a given esterification rate in the esterification processor 10 is fed to the initial polymerization processor (second processor) via a connection pipe 13. More particularly, when the solution reaches a given esterification rate in the esterification processor 10, it is fed to the initial polymerization processor (second processor) 20 by means of an oligomer pump 15 provided in the middle of the connection pipe 13.

(Second processor)

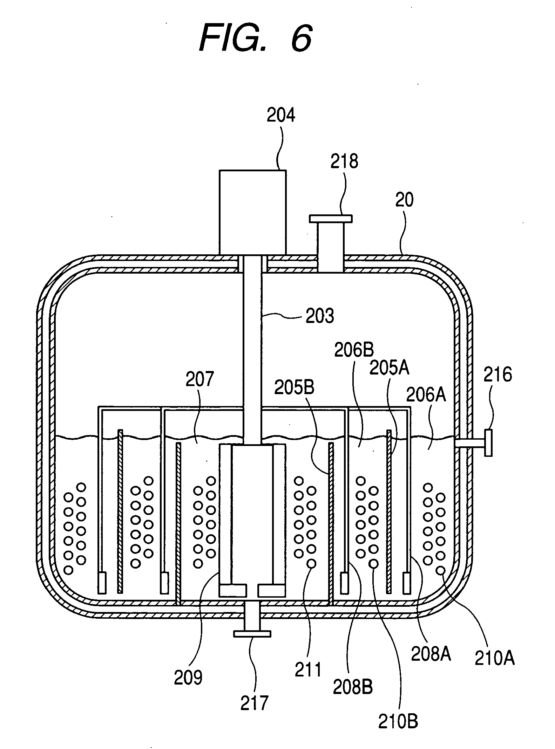

Next, the second processor (initial polymerization processor) 20 is briefly described with reference to Figs. 1 and 6. In Fig. 1, the initial polymerization processor 20 includes a vertically long, cylindrical vessel body covered with a heat medium jacket 202 therearound, and a rotary shaft 203 and a drive device 204 above the center of the vessel body. The vessel body is divided into two chamber by means of a cylindrical partition plate 205 to form a donut-shaped first chamber 206 and a cylindrical second chamber 207. Agitation blades 208 and 209 attached to a common half-length rotary shaft 203 are provided and rotated in the agitation chambers 206, 207 for agitation. Moreover, heat transfer tubes 210, 211 are attached outwardly of the agitation blades 206, 207 in the agitation chambers 206, 207, respectively. Heat medium inlet nozzles 214, 213 and outlet nozzles 212, 215 attached to the heat transfer tubes 210, 211 are disposed through the vessel body. An inlet nozzle 216 for the solution is attached to the lower portion of the first chamber 206 of the vessel body, and an outlet nozzle 217 for the solution is attached to a lower center of the second chamber 207 of the vessel container. Moreover, an outlet nozzle 218 for volatile matter is provided at the upper portion of the vessel body and is connected via tubes to a condenser and a vacuuming device (not shown).

The agitation blade 208 in the first chamber 206 is higher in circumferential velocity than the agitation blade 209 in the second chamber 207 and thus, is so slimly shaped that an agitation resistance becomes small. The agitation blade 209 in the second chamber 207 is low in circumferential velocity and has a wide shape whose agitation resistance is great. In this way, when using the agitation blades 208 and 209 which rotate at the same number of revolutions, a similar agitation effect is obtainable in both agitation chambers 206 and 207.

In such an apparatus as set out above, a solution, which is continuously supplied from the inlet nozzle 216, is initially charged into the first chamber 206, and is heated by means of the heat transfer tube 210 and agitated with the agitation blade 208, during which a polycondensation reaction proceeds. The resulting volatile matters such as 1,4-butanediol evaporate and are collected in a condenser from the outlet nozzle 218 for volatile matter. The solution wherein the reaction proceeds as set out above is allowed to flow over the upper end of the partition plate 205 from the upper portion of the first chamber 206 and enters into the second chamber 207. In the second chamber 207, the solution is heated with the heat transfer tube 211 in a manner as in the first chamber and agitated with the agitation blade 209, during which the polycondensation reaction further proceeds. The resulting volatile maters such as 1, 4-butanediol evaporate and are collected with a condenser from the outlet nozzle 218.

The solution wherein the reaction proceeds as set forth above is passed from the lower portion of the second chamber 207 via the outlet nozzle 217 to a next final polymerization processor 30. At this stage, the solution is completely mixed in the two agitation chambers 206, 207 in the initial polymerization processor 20 wherein the reaction proceeds efficiently. Thus, a polymer of good quality can be continuously produced without involving a short path and without thermal decomposition between the two chambers (the first chamber 206 and the second chamber 207) in the closed pipes.

Where PBT is polymerized using such an apparatus as set out hereinbefore, bishydroxybutyl terephthalate having an average degree of polymerization of from 2 to 5 is continuously fed from the inlet nozzle 216 to permit the polycondensation reaction to proceed. The resulting 1,4-butanediol and water vapor are separated from each other in the initial polymerization processor 20 to obtain a PBT polymer having an average degree of polymerization between 20 and 70 from the outlet nozzle 217 at the central portion of the initial polymerization processor 20. Operation conditions include a solution temperature of 230-255° C, a pressure of 0.5-20 kPa and the number of revolutions of the agitation blades ranging 5-100 r.p.m.

According to the embodiment recommended in the present invention, as shown in Fig. 6, the initial polymerization processor 20 is divided into three chambers by means of cylindrical partition plates 205A and 205B, thereby forming a donut-shaped first chamber206A and a second chamber 206B and a cylindrical third chamber 207 , in which agitation blades 208A, 208B and 209 rotating in the agitation chambers 206A, 206B and 207 for agitation are attached to a rotary shaft 203 and heat transfer tubes 210A, 210B and 211 are attached to in the agitation chambers 206A, 206B and 207. In this way, when the three complete mixing vessels are constituted in the initial polymerization processor 20, the polymerization reaction can be carried out within a further short time, thereby continuously manufacturing a BPT polymer that has reduced thermal degradation and is good at quality.

The solution in the initial polymerization processor (second processor) 20 after a lapse of a given reaction time is fed via a connection pipe 21 to the final polymerization processor (third processor) 30 by means of a prepolymer pump 22.

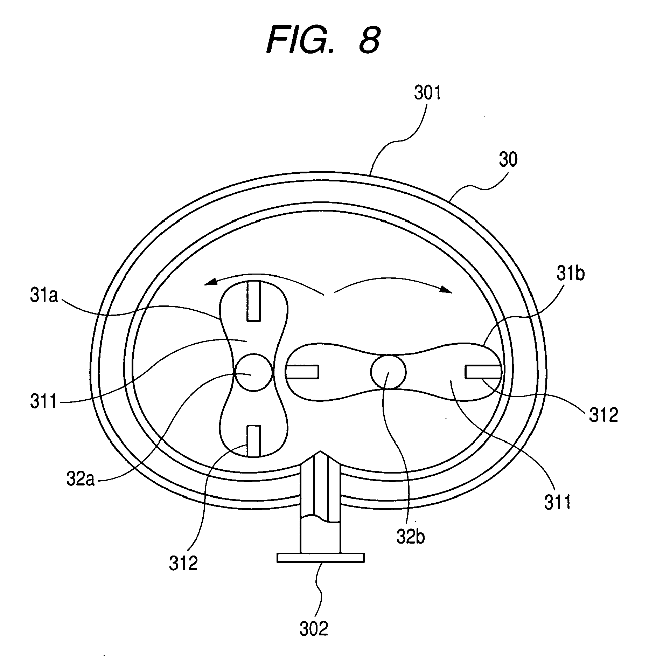

Next, the final polymerization processor 30 is particularly illustrated with reference to Figs. 1, 7, 8 and 9. The final polymerization processor (third processor) 30 is adapted to manufacture, at one time, PBT 50 having a viscosity of about 500-2500 Pa-s, which is made of a high degree polymerization polymer having an average degree of polymerization of 150-200, from PBT having a viscosity of about 0.1-45 Pa-s that is obtained in the initial polymerization processor (second processor) 20 and is made of a low polymerization degree polymer (prepolymer) having an average degree of polymerization of 20-70. Thus, the treated solution has a viscosity ranging from a low viscosity of 0.1-45 Pa-s to a high viscosity of about 500-2500 Pa-s, for which there must be used a processor having an agitator device for treating a highly viscous solution. As an optimum device for use as such a processor, mention is made of a device described in Patent Document 2, wherein a continuous agitation device (an eye brow blade type polymerization processor) set out in Japanese Patent Publication No. Hei 819241 is further improved to realize a processor using the improved device. The final polymerization processor (third processor) 30 is a two-axle polymerization apparatus including eye brow-shaped agitation blades (which are constituted, as shown in Fig. 8, of one or plural eye brown-shaped plate members 311 and a scraper plate 312 attached to the tip of the eye brow-shaped blade at right angles thereof) 31a, 31b that are attached, at a phase difference of 90 degrees at a given interval, to agitation shafts 32a, 32b driven by an outside power source 35, the phase difference of the agitation shafts being made with a phase difference of 90 degrees. It will be noted that if one eye brow-shaped agitation blade is constituted by plural eye brow-shaped plate members 311 and a scraper plate 312 attached to the tip thereof, more efficient agitation of polymer becomes possible.

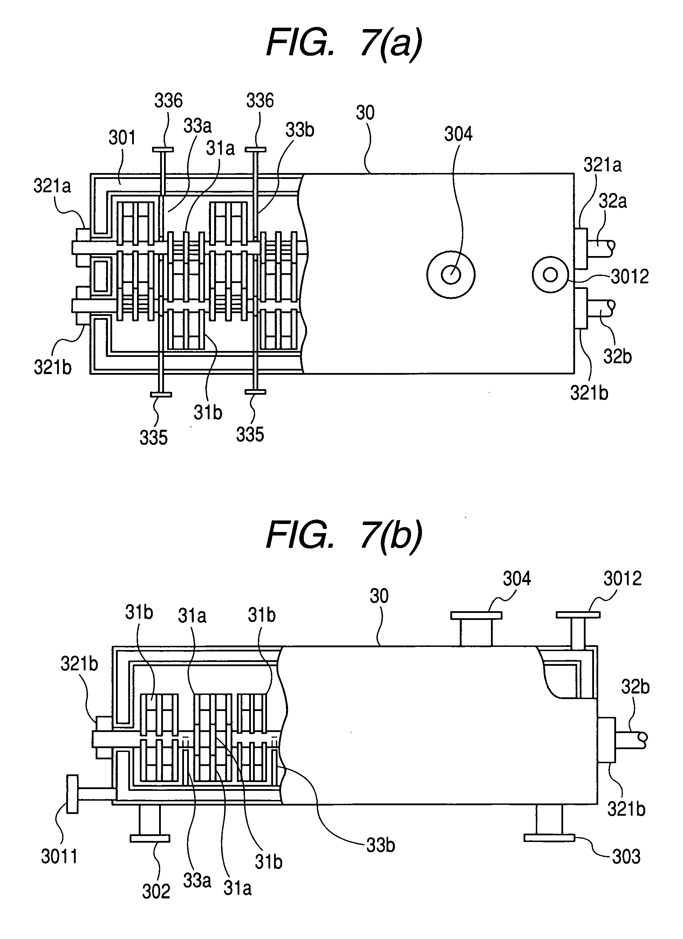

For this, the reaction is carried out under reaction conditions of 230°C-255°C and a pressure of 0.665 kPa-0.067 kPa. Especially, in order to make a polymer acid value, which is one of parameters for evaluating the quality of PBT, as low as possible, it is preferred that the reaction temperature is below 250° C (including 250° C). Accordingly, as shown in Figs. 7 and 8, the final polymerization processor 30 has a heat medium jacket structure 301 of an eye brow in section so as to keep the polymer at a reaction temperature. Indicated by 302 is a heat medium inlet relative to the heat medium jacket 301, and by 3012 is a heat medium outlet. Indicated by 302 is a prepolymer inlet and by 303 is a polymer outlet. Numeral 304 designates a vapor outlet. 321a and 321b, respectively, indicate bearings of agitation shafts 32a, 32b.

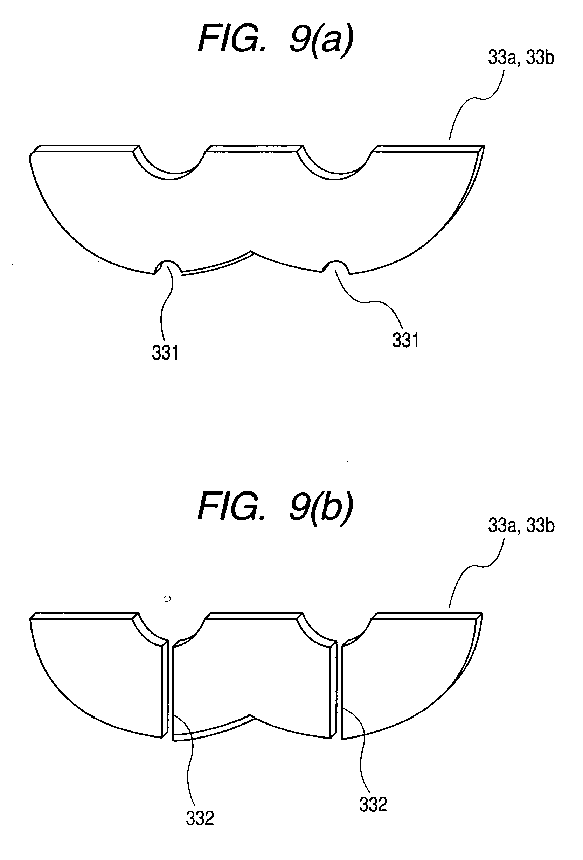

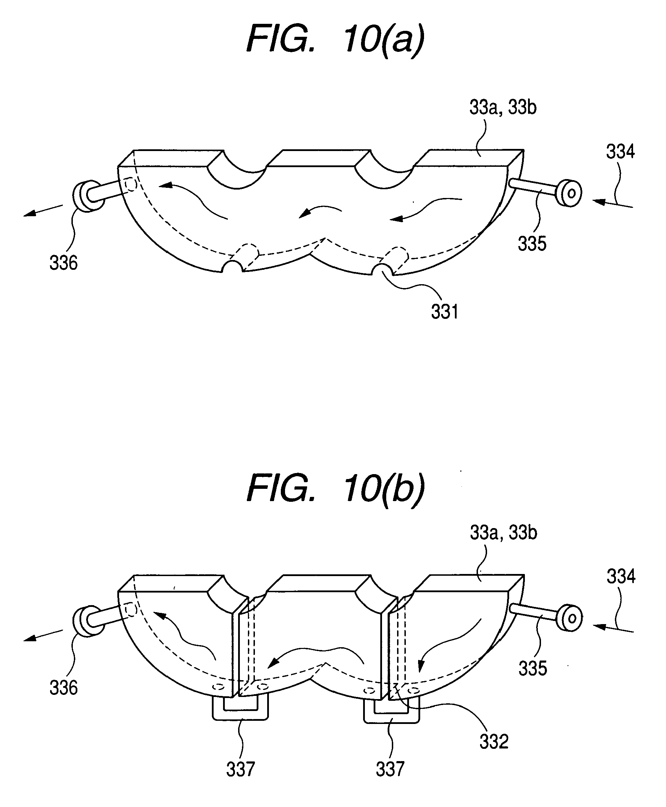

For polycondensation over a wide range of low to high viscosities, several stages of eye brow-shaped agitation blades 31a, 31b near the inlet of prepolymer are so arranged as to provide partition plates 33a, 33b at about the lower half portion as shown in Figs. 1, 9 and 10 to increase a residence time. However, mere provision of the partition plates 33a and 33b results in too high a resistance because a low polymerized polymer (prepolymer) having a viscosity of about 0.1-45 Pa-s moves by overflowing the partition plates 33a and 33b. To avoid this, as shown in Fig. 9(a), holes 331 are made at the bottoms of the partition plates 33a and 33b, enabling the low polymerized polymer (prepolymer) to pass through the holes 331. Thus, the resistance is, more or less, made low. In addition, as shown in Fig. 9(b), when slits 332 are formed in the partition plates 33a and 33b, the low polymerized polymer (prepolymer) is able to pass through the slits 332, enabling the resistance to be slightly made low. Moreover, a preferred embodiment is such that as shown in Figs. 10(a) and (b), a heat medium 334 is passed to the partition plates 33a and 33b from an inlet 335 to an outlet 336 so as to promote polycondensation. With the embodiment shown in Fig. 10(b), because of the provision of the slit 332, flow paths of the heat medium have to be connected through tubes 337.

In this manner, a low polymerized prepolymer is agitated in the regions partitioned with the partition plates 33a and 33b and moves through the holes 331 or slits 332 and over the partition plates 33a and 33 and thus a residence time can be secured. Thereafter, the prepolymer can be charged into a partition plate-free region with eye brow-shaped agitation blades so as to obtain a high polymerized polymer. As a matter of course, the space between the inlet-side eye brow agitation blades along a direction of the shaft may be narrowed to increase an amount of the low viscosity prepolymer to be entrained therewith, thereby increasing a polycondensation rate. In contrast, the space between the outlet-side eye brow agitation blades along the direction of shaft is widened, thus enabling a highly viscous polymer to be dealt with.

More particularly, while the prepolymer with a low viscosity fed from the inlet 302 is drawn outwardly by means of the agitation blades 31a, 31b that rotate from the center toward the outer side mutually in opposite directions and is stayed in every region partitioned with the partition plates 33a and 33b, the prepolymer undergoes a good surface refreshing action and volatile components are evaporated from the inside of the prepolymer thereby promoting the reaction and gradually increases the viscosity. Subsequently, the polymer whose viscosity gradually increases is drawn outwardly by means of the agitation blades 31a, 31b that mutually rotate from the center through an upper side to an outer side, for which the polymer undergoes a good surface refreshing action and volatile matters are evaporated from the inside of the prepolymer to promote the reaction, and a polymer of a high degree of polymerization having a viscosity as high as about 500-2500 Pa-s is discharged from the outlet 303.

As a result, the final polymerization processor 30 is able to carry out polycondensation by a single apparatus and enables an apparatus cost to be remarkably reduced. The residence times of the first-third processors range 4-7.5 hours, and a total residence time of all the polymerization steps optimally ranges from 2 to 4 hours from the standpoint of quality assurance. If necessary, the residence time may be prolonged by controlling the temperature and pressure. For instance, where a production amount is reduced, the prolongation may be made so as to minimize a quality variation.

As stated hereinabove, according to this embodiment, the first processor (a processor of causing an esterification reaction to proceed) constituting a continuous manufacturing apparatus (system) of PBT (polybutylene terephthalate) is so arranged that an efficiency of heat exchange to a solution by heating means is improved thereby enabling a residence time to be shortened. As a consequence, polybutylene terephthalate can be continuously manufactured in an efficient manner.

According to this embodiment, the final polymerization processor (third processor) constituting the continuous manufacturing apparatus (system) of PBT (polybutylene terephthalate) can be made by a single apparatus, thereby enabling an apparatus cost to be reduced and also a manufacturing cost of polybutylene terephthalate to be reduced.

**Claims**

1.  An apparatus for manufacturing a polyester polymer comprising
    a first processor for preparing an oligomer by agitating a solution containing a dicarboxylic acid and a glycol and heating the solution with a vapor or liquid phase heat medium to make an esterification reaction,
    wherein the first processor comprises at least,
    a vertical cylindrical type esterification processor to which the solution is fed,
    an agitator for agitating the solution in the esterification processor, and
    a heater including a set of upper header tubes disposed at an upper portion in the esterification processor, a set of lower header tubes disposed at a lower portion in the esterification processor, and a plurality of communicating tubes connected to the upper header tubes and the lower header tubes, the plurality of communicating tubes enabling the heat medium to flow through the upper header tube and the lower header tube,
    **characterized in that** the set of upper header tubes are constituted by a plurality of unit upper header tubes provided along a circumferential direction of the esterification processor,
    the set of lower header tubes are constituted by a plurality of unit lower header tubes provided along the circumferential direction of the esterification processor, and
    the communicating tubes are respectively connected to the unit upper header tubes and the unit lower header tubes that are vertically in a face-to-face relation with each other, and
    the unit upper header tubes and the unit lower header tubes respectively have heat medium inflow and outflow ports for permitting the heat medium to flow in or flow out.

2.  The apparatus according to Claim 1,
    wherein the plurality of unit upper header tubes and the plurality of unit lower header tubes are arranged such that adjacent ones along the circumferential direction of the esterification processors have a space therebetween.

3.  The apparatus according to Claim 1,
    wherein the plurality of unit upper header tubes and the plurality of unit lower header tubes are arranged such that adjacent ones along the circumferential direction of the esterification processor are mutually connected through connection members, and
the connection members have a coefficient of thermal expansion being equal to or smaller than a coefficient of thermal expansion of the plurality of unit upper header tubes and the plurality of unit lower header tubes.

4.  The apparatus according to Claim 1,
    wherein the plurality of communicating tubes are arranged along a central axis of the esterification processor on circumferences of a plurality of concentric circles around the central axis of the esterification processor.

5.  A method for manufacturing a polyester polymer using the apparatus defined in any one of Claim 1 - 4,
    **characterized by** preparing the oligomer
    by feeding the solution containing the dicarboxylic acid and the glycol to the esterification processor, and operating the apparatus by setting an inner temperature of the esterification processor at 220°C-250°C and an inner pressure of the esterification processor at 200 Torr - 800 Torr.

6.  The method for manufacturing a polyester polymer according to Claim 5,
    wherein the dicarboxylic acid is an aromatic dicarboxylic acid mainly composed of terephthalic acid, and the glycol is a glycol mainly consisting of 1, 4-butanediol.

*FIG. 1*

# FIG. 2

# FIG. 3

# FIG. 4(a)

# FIG. 4(b)

# FIG. 5a

# FIG. 5b

# FIG. 6

# FIG. 7(a)

# FIG. 7(b)

# FIG. 8

# FIG. 9(a)

33a, 33b

331          331

# FIG. 9(b)

33a, 33b

332          332

# FIG. 10(a)

# FIG. 10(b)

# FIG. 11

# FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHOWA62195017 B
- JP 2006111647 A
- JP HEI819241 B